# EUROPÄISCHE PATENTSCHRIFT

(11) **EP 3 875 228 B1**
(45) Veröffentlichungstag und Bekanntmachung des Hinweises auf die Patenterteilung: **15.06.2022**
(21) Anmeldenummer: 21152728.8
(22) Anmeldetag: 21.01.2021
(51) Int. Cl.: B25J 9/16

(54) **SYSTEM ZUR ÜBERWACHUNG EINES GEFAHRENBEREICHS AN EINEM BEWEGBAREN MASCHINENTEIL**
SYSTEM FOR MONITORING A HAZARD AREA AT A MOVABLE MACHINE PART
SYSTÈME DE SURVEILLANCE D'UNE ZONE DE DANGER SUR UNE PARTIE MOBILE DE MACHINE

(30) Priorität: 06.03.2020 DE 102020106161
(43) Veröffentlichungstag der Anmeldung: 08.09.2021
(73) Patentinhaber: SICK AG, 79183 Waldkirch (DE)
(72) Erfinder: Hofmann, Christoph, 79108 Freiburg (DE); Erlewein, Patrick, 79194 Heuweiler (DE); Schonhardt, Axel, 79183 Waldkirch (DE)

(56) Entgegenhaltungen:
- EP-A1- 3 415 286
- EP-A1- 3 533 568
- EP-A1- 3 578 324
- WO-A1-2019/042784
- DE-A1-102015 112 656
- DE-A1-102015 121 262
- DE-A1-102018 113 359

## Beschreibung

Die vorliegende Erfindung betrifft ein System mit einem Sensorsystem mit Distanzsensoren.

Die DE 10 2015 112 656 A1 offenbart eine Vielzahl von optoelektronischen Distanzsensoren an einem bewegbaren Maschinenteil.

Im heutigen Produktionsumfeld ergeben sich immer häufiger Aufgaben, in denen Menschen mit Robotern Hand in Hand auf engem Raum zusammenarbeiten müssen. Ein Schutz des Menschen vor dem Roboter ist hierbei nicht durch mechanische Schutzeinrichtungen wie Zäune oder Absperrungen möglich, sondern muss in die unmittelbare Umgebung des Roboters verlagert werden.

Um diese Art der Zusammenarbeit grundsätzlich möglich zu machen, haben Roboterhersteller Roboter mit einer Leistungs- und Kraftbegrenzung entwickelt. Die maximale Kraft, die ein Roboter ausüben kann, bevor die Bewegung automatisch gestoppt wird, kann hier so eingestellt werden, dass im Falle einer Kollision des Roboters mit einem Menschen eine Krafteinwirkung nicht zu ernsthaften Verletzungen führen kann. Die Motorsteuerung sowie die Drehgeber, welche eine Positionsbestimmung des Roboterarms vornehmen, sind Sicherheitskomponenten mit entsprechender Zertifizierung.

Zudem wird beim Design der mechanischen Roboterkomponenten bewusst auf kantenfreie, runde oder weiche Außenkonturen geachtet, damit eine mögliche Kollisionskraft möglichst großflächig verteilt wird und keine Gefahr von Schnittwunden oder dergleichen auftreten kann.

Eine zunehmende Verbreitung sicherer Kleinroboter mit sicheren Bewegungssteuerungen und kraftbegrenzten Antrieben reduziert die Gefahrquellen auf den Werkzeugaufsatz am Ende des Roboterarms. Ein noch nicht zufriedenstellend gelöstes Problem hierbei ist die Absicherung des Werkzeuges am Roboter an sich. Das Werkzeug selbst besteht häufig aus scharfen oder spitzen Teilen, Teilen die rotieren oder heiß sind, usw., um seine Aufgabe überhaupt ausführen zu können. Beispiele sind Bohrer, Schrauber, Fräser, Klingen, scharfkantige Greifer für filigrane Teile, Schweißzangen, Lötspitzen etc.

Am Werkzeug besteht somit eine erhöhte Verletzungsgefahr auch bei sicherer Kraftbegrenzung des Roboters aufgrund von Eigenbewegung des Werkzeugs oder scharfkantigen Teilen. Selbst stumpfe Werkzeuge können bei einem scharfkantigen Arbeitsbereich oder Umgebungsbereich eine Gefahr darstellen. Ein Werkzeugaufsatz hat üblicherweise geringe Abmessungen und ist gut lokalisiert. Gleichzeitig stellt die große Vielfalt an möglichen Werkzeug-Geometrien, die schnelle Bewegung in vielen Freiheitsgraden und die Forderung nach schnellen Anpass- und Wechsel-Geometrien des Werkzeugaufsatzes neue Anforderungen an eine Absicherungslösung, die bestehende Sicherheitssensoren nicht oder nur unzureichend erfüllen können.

Bei Robotern handelt es sich um nicht fertige Maschinen, da sie ohne Werkzeug ausgeliefert werden. Auch inhärent sichere MRK-Roboter erhalten aus diesem Grund kein CE-Kennzeichen. Als BWS ausgeprägte Sicherheitssensoren können verwendet werden, um einen Roboter inklusive Werkzeug und Werkstück abzusichern. Diese Sensoren müssen am Roboter befestigt werden.

Die EP 3 578 324 A1 offenbart ein Sensorsystem mit Distanzsensoren zur Überwachung eines Gefahrenbereichs an einem bewegbaren Maschinenteil mit mindestens einem Schutzbereich, wobei an dem bewegbaren Maschinenteil ein Werkzeug und/oder ein Werkstück angeordnet ist, wobei die Distanzsensoren an einem Halter an dem bewegbaren Maschinenteil angeordnet sind, wobei eine Vielzahl von Distanzsensoren angeordnet sind, wobei die Detektionsstrahlen der Distanzsensoren ein Schutzfeld bilden, wobei der Halter Aufnahmen für die Distanzsensoren aufweist, wobei an dem Halter ein erster Befestigungsadapter angeordnet ist zur Befestigung des Halters an dem bewegbaren Maschinenteil und ein zweiter Befestigungsadapter an dem Halter angeordnet ist zur Befestigung des Werkzeuges an dem Halter und zwischen den Befestigungsadaptern der Halter ein scheibenförmiges Gehäuse aufweist, wobei das scheibenförmige Gehäuse runde Oberflächen aufweist und an den Außenflächen keine Ecken aufweist. Die DE 10 2015 121 262A1 offenbart einen Werkzeugadapter, der zur Anbringung eines Werkzeugs an einem Roboterhandgelenk, das ein erstes Drehelement, welches um eine erste Achse drehbar ist, und ein zweites Drehelement, welches um eine zu der ersten Achse orthogonale zweite Achse drehbar ist, aufweist, ausgebildet ist. Der Werkzeugadapter weist einen ersten Abschnitt, der dazu ausgebildet ist, an einem ersten Anbringungsteil an dem zweiten Drehelement angebracht zu werden; und einen zweiten Abschnitt, der sich von dem ersten Abschnitt erstreckt und dazu ausgebildet ist, an einem zweiten Anbringungsteil an dem Werkzeug angebracht zu werden, auf. Der erste Anbringungsteil und der zweite Anbringungsteil sind jeweils an Positionen angeordnet, an denen eine Richtung einer Reaktionskraft, die während einer Tätigkeit, die unter Verwendung des Werkzeugs an einem Objekt vorgenommen wird, von dem Objekt über das Werkzeug auf den zweiten Abschnitt ausgeübt wird, so definiert ist, dass sie sowohl die erste Achse als auch die zweite Achse schneidet.

Die DE 10 2018 113 359 A1 offenbart ein Sensorsystem mit optoelektronischen Distanzsensoren zur Überwachung eines Gefahrenbereichs an einem bewegbaren Maschinenteil mit mindestens einem Schutzfeld, wobei die optoelektronischen Distanzsensoren ringförmig in einem ersten Ring an dem bewegbaren Maschinenteil angeordnet sind, wobei an dem bewegbaren Maschinenteil ein Werkzeug angeordnet ist, wobei die optischen Achsen der Distanzsensoren jeweils tangential zur Ringform einen spitzen Winkel aufweisen oder die Distanzsensoren rotierbar an dem Ring angeordnet sind.

Die EP 3 415 286 A1 offenbart ein Verfahren zum Überwachen eines Roboters umfassend die Schritte: Überwachen einer Sicherheitsbedingung; und Betreiben des Roboters in einem Limitierungsbetriebsmodus, solange die überwachte Sicherheitsbedingung nicht erfüllt ist; wobei in dem Limitierungsbetriebsmodus ein Abbremsen des Roboters kommandiert und überwacht wird, solange dieser ein Geschwindigkeitslimit überschreitet.

Die WO 2019/042784 A1 offenbart eine Vorrichtung zur Erkennung von Gegenständen für einen Roboter umfassend:
- mindestens einen sogenannten Näherungssensor, welcher eine erste Erkennungstechnologie zur Erkennung eines Gegenstandes in der Umgebung umsetzt; und
- mindestens einen sogenannten Näherungssensor, der eine zweite Erkennungstechnologie zur Erkennung eines Gegenstandes in der Umgebung umsetzt, welche von der ersten Technologie abweicht und eine kleinere Reichweite als die Reichweite des mindestens einen Näherungssensors hat; mindestens ein Näherungssensor ist ein kapazitiver Sensor, der mindestens eine Messelektrode umfasst, welche mit einem ersten, von einem allgemeinen Massepotential abweichenden, elektrischen Wechselpotential bei einer Arbeitsfrequenz polarisiert ist;
wobei wenigstens ein Näherungssensor auf ein elektrisches, sogenanntes Schutz-Wechselpotential bei der Arbeitsfrequenz eingestellt ist, das dem ersten Potential gleich oder im Wesentlichen gleich ist.

Die EP 3 533 568 A1 offenbart ein Robotersystem, umfassend: ein bewegliches Maschinensteuerungsteil, das den Betrieb eines beweglichen mechanischen Teils gemäß einer eingestellten Betriebsart steuert; ein Lehrinhaltsregistrierungsteil, das die Eingabe eines Lehrinhalts durch einen Benutzer durch Aufbringen einer Betätigungskraft auf das bewegliche mechanische Teil registriert; einen ersten Sensor, der einen Kontakt des Benutzers mit dem beweglichen mechanischen Teil erfasst; wobei der erste Sensor das Eindringen eines Objekts in einen ersten Überwachungsbereich erfasst, der um das bewegliche mechanische Teil herum festgelegt ist; und dass das Robotersystem ferner umfasst: ein Betriebsmodus-Schaltteil, das den Betriebsmodus zwischen einem ersten Modus und einem zweiten Modus umschaltet, wobei der Betrieb des beweglichen mechanischen Teils verlangsamt oder angehalten wird, wenn der erste Sensor das Eindringen des Objekts in den ersten Überwachungsbereich im ersten Modus erfasst, und wobei der Lehrinhalt akzeptiert und ausgeführt werden kann, während der erste Sensor den Kontakt des Benutzers mit dem beweglichen mechanischen Teil in dem zweiten Modus erfasst.

Eine Aufgabe der Erfindung besteht darin, ein verbessertes System mit einem Sensorsystem bereitzustellen.

Die Aufgabe wird gemäß Anspruch 1 gelöst durch ein System mit einem Sensorsystem mit Distanzsensoren und einer Steuer- und Auswerteeinheit zur Überwachung eines Gefahrenbereichs an einem bewegbaren Maschinenteil mit mindestens einem Schutzbereich, wobei an dem bewegbaren Maschinenteil ein Werkzeug angeordnet ist, wobei die Distanzsensoren an einem Halter angeordnet sind, wobei eine Vielzahl von Distanzsensoren angeordnet sind, wobei die Detektionsstrahlen der Distanzsensoren einen Schutzfeldmantel bilden, wobei der Halter die Distanzsensoren aufweist, wobei der Halter ein scheibenförmiges Gehäuse aufweist, wobei das scheibenförmiges Gehäuse runde Oberflächen aufweist und an den Außenflächen keine Ecken aufweist, wobei das System ein Befestigungssystem umfasst, wobei das Befestigungssystem einen ersten Befestigungsadapter umfasst, an dem der Halter angeordnet ist zur Befestigung des Halters an dem Werkzeug, wobei der erste Befestigungsadapter eine zentrale durchgehende Öffnung für das Werkzeug aufweist, oder das Befestigungssystem einen zweiten Befestigungsadapter umfasst, an dem der Halter angeordnet ist zur Befestigung des Halters an dem bewegbaren Maschinenteil, wobei der zweite Befestigungsadapter zwei Schenkel aufweist, die in einem rechten Winkel zueinander angeordnet sind, wobei an dem ersten Schenkel der Halter befestigt ist und an dem zweiten Schenkel der zweite Befestigungsadapter mit dem bewegbaren Maschinenteil verbunden ist, wobei der erste Befestigungsadapter oder der zweite Befestigungsadapter mit dem Halter mittels einer einzigen Verschraubung verschraubt sind, wobei die Verschraubung einen Durchmesser aufweist, der größer als die zentrale durchgehende Öffnung für das Werkzeug ist.

Der Halter mit den Distanzsensoren bildet ein EOAS (EOAS, End-of-Arm-Safeguarding), also ein Schutzsystem an einem Arm Ende.

Das Befestigungssystem wird vorzugsweise an der letzten Achse eines Roboters fixiert. Damit weist das Befestigungssystem eine definierte Orientierung bzw. einen definierten Winkel zur letzten Achse auf.

Eine Längsachse des Werkzeugs ist vorzugsweise im Winkel von 90° zu einer letzten Achse des bewegbaren Maschinenteils angeordnet.

Gemäß der Erfindung ist das Werkzeug in der Applikation abgesichert. Dadurch ist die direkte Kollaboration von Mensch und Roboter inkl. Werkzeug möglich. Dadurch steigert sich die Durchlaufzeit, die Arbeitssicherheit wird erhöht und es wird deutlich weniger Raum zur Absicherung in Anspruch genommen, da nur die direkte Gefahrenstelle abgesichert ist.

Das scheibenförmige Gehäuse weist runde Oberflächen auf und an den Außenflächen keine Ecken auf.

Hier liegt ein Befestigungssystem für den Halter und damit für die Distanzsensoren vor, das eine flexible Lösung für applikationsspezifische Anforderungen darstellt. Insbesondere ist hier durch das Befestigungssystem bzw. die Befestigungsadapter eine Adapterfunktion für verschiedene Roboterflansche und Endeffektoren vorgesehen. Zudem ist das Sensorsystem mit dem scheibenförmigen Gehäuse mit dem Befestigungssystem inhärent sicher in Form und Material sowie mechanisch stabil, um einerseits Manipulationen der Sicherheitseinrichtungen zu unterbinden und andererseits Kräfte an einen gegebenenfalls leistungs- und kraftbegrenzten Roboter weiter zu geben.

Durch die runde Oberfläche des scheibenförmigen Gehäuses ist an jeder Stelle eine mögliche Kollisionsfläche vorhanden und eben keine Kollisionskante oder Kollisionsecke, wodurch ein Verletzungsrisiko minimiert ist. Die Außenkonturen des scheibenförmigen Gehäuses sind dabei optional rundlich, auch kreisförmig oder bogenförmig ausgebildet.

Das System hat keine scharfen Kanten. Vielmehr ist eine organische Form vorgesehen, die bei Berührung eine geringe Flächenpressung nach sich zieht. Das System weist keine Spalten auf, in dem sich die Finger oder Kleidung des Werkers verfangen könnte.

Auch Kabelführungen und/oder Schlauchzuführungen sind inhärent sicher ausgelegt, so dass diese keine Ecken aufweisen und bei Krafteinwirkung nachgiebig ausgebildet sind. Die Kabelführungen und/oder Schlauchzuführungen werden insbesondere eng geführt, um ein Verfangen der menschlichen Hand zu vermeiden.

Der Halter, der die Distanzsensoren aufnimmt, kann monolithisch oder modular sein.

Der Halter bzw. die Aufnahme für die Distanzsensoren sind fest mit den Befestigungsadaptern verbunden, so dass sie sich bei einem Stoß zwischen Mensch und Halter nicht von den Befestigungsadaptern lösen. So können Kräfte an den Roboter weitergegeben werden. Das mechanische Design ist so stabil ausgelegt, dass Kräfte an den Roboter und dessen Leistungs- und Kraftbegrenzung weitergegeben werden können.

Das Sensorsystem dient zum sicheren Überwachen des Gefahrenbereichs bzw. eines Überwachungsbereichs des bewegbaren Maschinenteils.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen einkanaligen Aufbau mit Testung, einen zweikanaligen oder zweikanalig diversitären Aufbau einer Steuer- und Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Sensor bzw. Distanzsensor optional über eine Sensortestung.

Die Steuer- und Auswerteeinheit erkennt Schutzfeldverletzungen und kann ein sicherheitsgerichtetes Abschaltsignal ausgeben, um eine gefahrbringende Bewegung des Teils zu stoppen bzw. das Teil abzubremsen. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden. Beispielsweise ist die Steuer- und Auswerteeinheit zweikanalig ausgebildet.

Die mehreren Distanzsensoren sind mit der Steuer- und Auswerteeinheit zur Auswertung der Distanzsensoren verbunden.

Die Distanzsensoren sind optional entlang einem Ring beabstandet zueinander angeordnet, wobei die Sensoren einen flächigen Schutzfeldmantel bilden, welcher sich beispielsweise zylinderförmig oder kegelstumpfförmig erstreckt.

Optional weisen die Distanzsensoren gleichmäßige Abstände auf. Durch die gleichmäßigen Abstände der Sensoren und eine jeweils identische Winkelausrichtung der Detektionsstrahlen wird eine nahezu gleichmäßige Auflösung innerhalb des Schutzfeldes erreicht.

Die Sensoren sind berührungslos wirkende abstandsmessende Distanzsensoren, wobei die Sensoren einen Detektionsstrahl zum Erfassen von Objekten im Überwachungsbereich aufweisen. Bevorzugt sind die Distanzsensoren optoelektronische Distanzsensoren.

Die Distanzsensoren können jeweils ein linienförmiges oder flächiges Schutzfeld aufweisen. Das flächige Schutzfeld ist fächerförmig ausgebildet mit einem bestimmten Öffnungswinkel von beispielsweise 2° bis 20°.

Die Überwachung erfolgt mit einer Anzahl einfacher, eindimensional tastender Distanzmesssensoren.

Beispielsweise sind die Distanzsensoren Lichtlaufzeitsensoren. Ein Lichtlaufzeitsensor bzw. ein Distanzsensor bzw. ein Lichttaster nach dem Lichtlaufzeitprinzip weist mindestens einen Lichtsender auf, der aufeinanderfolgende Lichtimpulse in einen Messbereich bzw. Überwachungsbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Ein modularer Aufbau des Halters ist ebenfalls vorgesehen. Ein Submodul des Halters enthält hierbei nur eine begrenzte Anzahl von Distanzsensoren. Durch Kombination verschiedener Submodule können so beliebige Absicherungskonturen erzeugt werden.

Zur Erzeugung eines quasi geschlossenen Schutzfeldmantels aus den Distanzsensoren ist eine Anpassung der Sensoranzahl vorgesehen: Es kann beispielsweise die Sensoranzahl verändert werden. Je mehr Distanzsensoren angeordnet werden, desto dichter liegen die optischen Achsen der Distanzsensoren nebeneinander, wodurch der Schutzfeldmantel eine höhere Auflösung aufweist.

Die Wellenlänge des ausgesendeten Lichts der Distanzsensoren ist vorzugsweise eine für das menschliche Auge unsichtbare Wellenlänge, beispielsweise Infrarotlicht. Dadurch wird ein gezieltes Eingreifen in mögliche Schutzlücken erschwert, da diese nicht sichtbar sind.

Optional weisen Aufnahmen des Halters für die Distanzsensoren mindestens eine mechanische Befestigung für die Distanzsensoren auf, an die die Distanzsensoren in mindestens einer vordefinierten Lage montierbar sind.

Der Halter bzw. eine Aufnahme in dem Halter ist so realisiert, dass alle Distanzsensoren eine feste Relativposition zueinander haben, die kompatibel mit dem Absicherungskonzept ist.

Die Distanzsensoren werden optional per Poka Yoke eingebaut, wonach die Sensoren automatisch zwingend positionsrichtig eingebaut werden müssen.

Die Aufnahme ist optional so realisiert, dass mehrere Orientierungen der einzelnen Distanzsensoren möglich sind, die jeweils kompatibel mit dem Absicherungskonzept sind.

Die Position und Ausrichtung der einzelnen BWS-Sensoren ist im final eingebauten Zustand für den Werker nicht mehr erkennbar, so dass dadurch eine Manipulation erschwert wird.

Optional weist der Halter Aufnahmen für Leiterplatten, Elektronikbaugruppen und/oder Kabelverbindungen auf.

Der Halter kann gleichzeitig als Aufnahme für weitere Elektronikbaugruppen, wie z.B. Kabel-Sammelplatinen, Logikeinheiten zur ersten Datenverarbeitung und/oder weiterer Sensoren dienen.

Die Kabelführung ist dabei so gestaltet, dass sich der Anwender oder Werker nicht in den Kabeln verfangen kann.

Der Halter sorgt optional für eine Zugentlastung der Kabel der Distanzsensoren.

Das Befestigungssystem ist so ausgebildet, dass aufgrund des Befestigungsmechanismus keine Manipulation möglich ist. D.h. der Halter bzw. das EOAS (EOAS, End-of-Arm-Safeguarding) muss zuerst montiert werden, anschließend das Werkzeug. Das Befestigungssystem ist so ausgelegt, dass der Halter nur nach Demontage des Werkzeugs entfernt werden kann

Das Befestigungssystem ist so ausgebildet, dass das Werkzeug relativ zum Halter bzw. EOAS höhenverstellbar ist. Dadurch kann der Schutzfeldmantel immer an die Applikation und der Dimension von Werkzeug und Werkstück angepasst werden. Somit können die technischen Grenzen des EOAS und die Sicherheit der Applikation in Einklang gebracht werden.

Das Befestigungssystem ist so ausgebildet, dass das Werkzeug einfach gewechselt werden kann. Dies kann vorzugsweise auch im laufenden Betrieb geschehen, also beispielsweise während eines Arbeitszyklus, wenn das Werkzeug stillsteht oder sich mit einer ungefährlichen Bewegungsgeschwindigkeit bewegt.

Das Befestigungssystem ist so ausgebildet, dass das Werkzeug nach einer Montage nicht in seiner Position und Lage verrutscht, da die Position von Werkzeuglänge zu Schutzfeldmantel gewährleistet bleiben muss.

Das Befestigungssystem ist so ausgebildet, dass eine Zugentlastung von Kabeln und Leitungen an dem Befestigungssystem vorgesehen ist.

Der erste und/oder zweite Befestigungsadapter ist beispielsweise aus Stahl, insbesondere Edelstahl. Jedoch können auch Befestigungsadapter aus Kunststoff vorgesehen sein.

Gemäß der Erfindung sind der erste Befestigungsadapter oder der zweite Befestigungsadapter mit dem Halter mittels einer einzigen Verschraubung verschraubt, wobei die Verschraubung einen Durchmesser aufweist, der größer als die zentrale durchgehende Öffnung für das Werkzeug ist.

Durch die einzige Verschraubung kann der Halter sehr schnell montiert werden. Dadurch, dass der Durchmesser eine Größe aufweist, der größer als die zentrale durchgehende Öffnung für das Werkzeug ist, kann die Verschraubung die zentrale Öffnung umschließen und die Verschraubung kann beispielsweise mit der bloßen Hand gelöst und befestigt bzw. fixiert werden.

In Weiterbildung der Erfindung weist der erste Befestigungsadapter eine ringförmige Befestigungseinheit auf, wobei die ringförmige Befestigungseinheit die zentrale Öffnung umschließt und an der ringförmigen Befestigungseinheit symmetrisch Befestigungsmittel angeordnet sind.

Dadurch kann eine zentrale Achse des ersten Befestigungsadapters deckungsgleich mit einer zentralen Achse des Werkzeuges angeordnet werden. Dabei ist das Werkzeug zentrisch zu dem ersten Befestigungsadapter und zentrisch zu dem Halter angeordnet. In Weiterbildung der Erfindung weist der erste Schenkel des zweiten Befestigungsadapters eine Öffnung für das Werkzeug auf.

Dadurch kann eine zentrale Achse der Öffnung des ersten Schenkels des zweiten Befestigungsadapters deckungsgleich mit einer zentralen Achse des Werkzeuges angeordnet werden. Dabei ist das Werkzeug zentrisch zu der Öffnung des ersten Schenkels des zweiten Befestigungsadapters und zentrisch zu dem Halter angeordnet.

In Weiterbildung der Erfindung weisen der erste Schenkel und der zweite Schenkel jeweils Befestigungslöcher auf.

Dadurch kann an dem ersten Schenkel einfach, beispielsweise mittels Montageschrauben der Halter befestigt werden und der zweite Schenkel des zweiten Befestigungsadapters beispielsweise mittels Montageschrauben mit dem bewegbaren Maschinenteil verbunden werden.

In Weiterbildung der Erfindung sind der erste Schenkel und der zweite Schenkel an den Enden jeweils rund ausgeführt.

Durch die runde Oberfläche der Enden sind keine scharfen Kanten oder Ecken vorhanden, wodurch ein Verletzungsrisiko minimiert ist. Die Außenkonturen der Schenkel sind dabei optional kreisförmig oder bogenförmig ausgebildet.

Das dem Werker exponierte Design darf keine scharfen Kanten haben. Vielmehr ist eine organische Form vorgesehen, die bei Berührung eine geringe Flächenpressung nach sich zieht. Das dem Werker exponierte Design weist keine Spalten auf, in dem sich die Finger oder Kleidung des Werkers verfangen könnte.

In Weiterbildung der Erfindung ist an dem Befestigungssystem eine Materialzuführungsvorrichtung angeordnet und befestigt.

Das Befestigungssystem ist so ausgebildet, dass Applikationen mit und ohne Zuführung von Montageteilen realisiert werden können. Bei Schraubapplikationen kann es z.B. vorkommen, dass Schrauben durch eine Zuführung entlang des Werkzeugs, beispielsweise eines Schraubwerkzeugs an die Montagestelle geliefert werden.

Das Befestigungssystem ist so ausgebildet, dass die Zuführung den Schutzfeldmantel nicht stört oder abschattet. Dabei wird die Materialzuführungsvorrichtung beispielsweise innerhalb des Halters geführt, also nicht durch den Schutzfeldmantel, oder die Materialzuführungsvorrichtung wird beispielsweise zwischen zwei Detektionsstrahlen nahe des Ursprungs der Detektionsstrahlen geführt, wodurch der Schutzfeldmantel ebenfalls nicht beeinträchtigt bzw. abgeschattet wird.

In Weiterbildung der Erfindung ist das Werkzeug ein Montagewerkzeug, ein Schraubwerkzeug, ein Klebewerkzeug, ein Reinigungswerkzeug, ein Bohrwerkzeug, ein Fräswerkzeug ein Schleifwerkzeug oder ein Entgratwerkzeug.

Derartige Werkzeuge können dadurch automatisiert angewendet werden, wodurch keine manuelle Anwendung mehr nötig ist. Dadurch kann ein Automatisierungsgrad wesentlich erhöht werden.

In Weiterbildung der Erfindung umfasst das System eine Steuer- und Auswerteeinheit, wobei die Distanzsensoren mit der Steuer- und Auswerteeinheit verbunden sind, wobei erste Detektionsstrahlen der Distanzsensoren den Schutzfeldmantel bilden und zweite Detektionsstrahlen der Distanzsensoren ein Warnfeldmantel bilden, wobei der Warnfeldmantel den Schutzfeldmantel umhüllt.

Der äußere Warnfeldmantel führt zu einer schwächeren Sicherheitsmaßnahme bei einem Eingriff wie beispielsweise einem Alarm oder einer gewissen Geschwindigkeitsreduktion und erst der innere Schutzfeldmantel fungiert als Schutzfeld mit einer echten Absicherung durch Anhalten, Ausweichen oder starke Geschwindigkeitsreduktion des Werkzeuges. Dadurch ist die Verfügbarkeit es Systems erhöht.

In Weiterbildung der Erfindung ist die Steuer- und Auswerteeinheit ausgebildet, eine Bewegungsgeschwindigkeit des bewegbaren Maschinenteils zu ändern, wobei die Bewegungsgeschwindigkeit bei einem Eingriff in den Warnfeldmantel verlangsamt wird und bei einem Eingriff in den Schutzfeldmantel gestoppt wird. Dadurch wird eine Verfügbarkeit des Systems erhöht.

In Weiterbildung der Erfindung ist die Steuer- und Auswerteeinheit ausgebildet, das Werkzeug erst dann zu aktivieren, wenn zwischen Werkzeug und einem Werkstück ein Mindestabstand vorhanden ist, wobei der Mindestabstand auf anthropometrischen Daten basiert.

In Weiterbildung der Erfindung ist die Steuer- und Auswerteeinheit ausgebildet, das Werkzeug erst dann zu aktivieren, wenn zwischen Werkzeug und einem Werkstück ein Mindestabstand vorhanden ist, wobei der Mindestabstand 10 mm bis 20 mm beträgt.

In Weiterbildung der Erfindung ist die Steuer- und Auswerteeinheit ausgebildet, das Werkzeug erst dann zu aktivieren, wenn zwischen Werkzeug und einem Werkstück ein Mindestabstand vorhanden ist, wobei der Mindestabstand 14 mm beträgt.

Das System bzw. die Steuer- und Auswerteeinheit ist dazu ausgebildet, dass der Schutzfeldmantel so ausgebildet ist, dass bei Annährung an einen Prozesspunkt, beispielsweise der Punkt, an dem die Schraube montiert wird, das bewegbare Maschinenteil bzw. der Roboter bei einem Eingriff in den Warnfeldmantel langsamer wird bzw. bei einem Eingriff in den Schutzfeldmantel stoppt.

Das System bzw. die Steuer- und Auswerteeinheit ist dazu ausgebildet, dass der Schutzfeldmantel so ausgebildet ist, dass das Werkzeug und Roboter im Falle eines Eingriffs abgeschaltet bzw. gestoppt wird. Insbesondere werden die Werkzeuge erst betätigt (z.B. Rotieren des Schraubkopfes/Bohrers oder des Entgraters, Betätigen der Klebedüse, etc.), wenn der Abstand zwischen Werkzeugspitze und zu bearbeitender Oberfläche kleiner als ein Mindestanstand ist. Dieser Mindestabstand ist an anthropometrische Daten gekoppelt. Möchte man beispielsweise die Verletzung/Quetschung eines Fingers vermeiden, so darf das Werkzeug erst betätigt werden, wenn der Abstand kleiner 14 mm ist, gemäß der Norm EN349.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein System mit einem Sensorsystem mit einem ersten Befestigungsadapter;
- Figur 2: ein System mit einem Sensorsystem mit einem zweiten Befestigungsadapter;
- Figur 3 und 4: jeweils einen zweiten Befestigungsadapter;
- Figur 5 und 6: jeweils einen ersten Befestigungsadapter;
- Figur 7: jeweils einen Halter mit Distanzsensoren;
- Figur 8 ein: Sensorsystem mit einem Schutzmantelfeld und einem Warnmantelfeld;
- Figur 9 und 10: jeweils ein Sensorsystem mit einem Schutzmantelfeld;

In den nachfolgenden Figuren sind identische Teile mit identischen Bezugszeichen versehen.

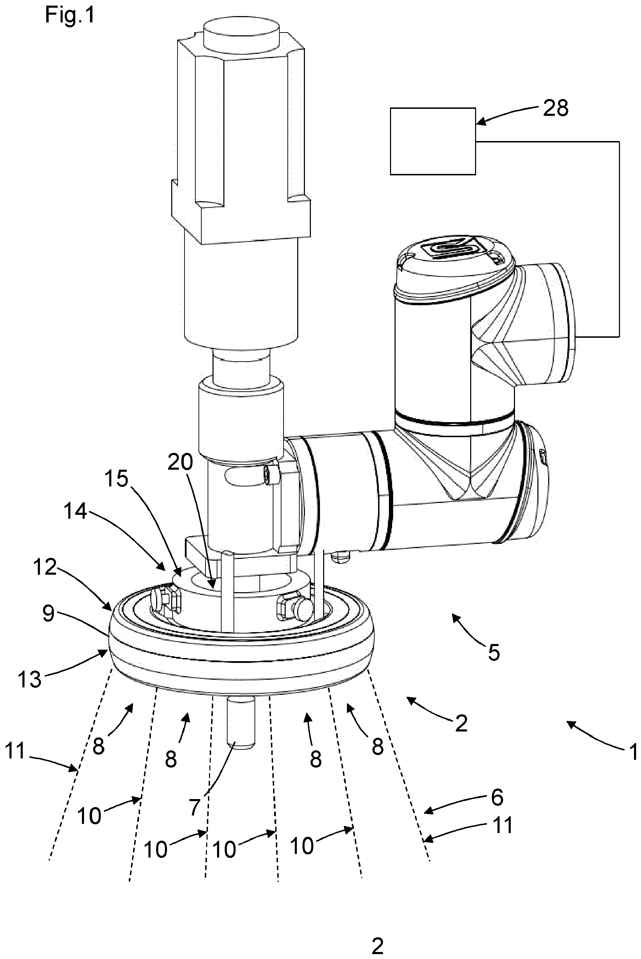

Figur 1 zeigt ein System 1 mit einem Sensorsystem 2 mit Distanzsensoren 8 zur Überwachung eines Gefahrenbereichs an einem bewegbaren Maschinenteil 5 mit mindestens einem Schutzbereich 6, wobei an dem bewegbaren Maschinenteil 5 ein Werkzeug 7 angeordnet ist, wobei die Distanzsensoren 8 an einem Halter 9 angeordnet sind, wobei eine Vielzahl von Distanzsensoren 8 angeordnet sind, wobei die Detektionsstrahlen 10 der Distanzsensoren 8 einen Schutzfeldmantel 11 bilden, wobei der Halter 9 die Distanzsensoren 8 aufweist, wobei der Halter 9 ein scheibenförmiges Gehäuse 12 aufweist, wobei das scheibenförmige Gehäuse 12 runde Oberflächen 13 aufweist und an den Außenflächen keine Ecken aufweist, wobei das System 1 ein Befestigungssystem 14 umfasst, wobei das Befestigungssystem 14 einen ersten Befestigungsadapter 15 umfasst, an dem der Halter 9 angeordnet ist zur Befestigung des Halters 9 an dem Werkzeug 7, wobei der erste Befestigungsadapter 15 eine zentrale durchgehende Öffnung 20 für das Werkzeug 7 aufweist,

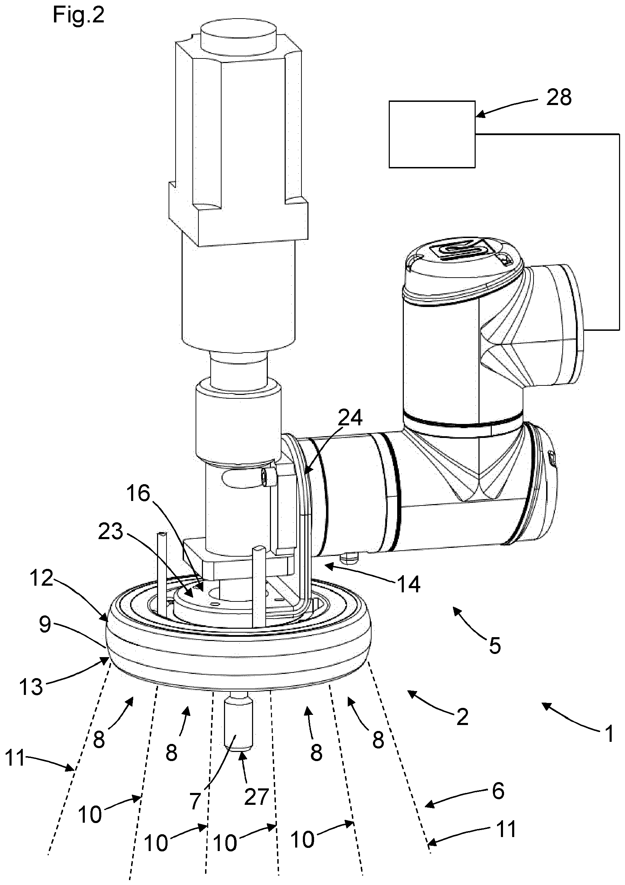

Figur 2 zeigt ein System 1 mit einem Sensorsystem 2 mit Distanzsensoren 8 zur Überwachung eines Gefahrenbereichs an einem bewegbaren Maschinenteil 5 mit mindestens einem Schutzbereich 6, wobei an dem bewegbaren Maschinenteil 5 ein Werkzeug 7 angeordnet ist, wobei die Distanzsensoren 8 an einem Halter 9 angeordnet sind, wobei eine Vielzahl von Distanzsensoren 8 angeordnet sind, wobei die Detektionsstrahlen 10 der Distanzsensoren 8 einen Schutzfeldmantel 11 bilden, wobei der Halter 9 die Distanzsensoren 8 aufweist, wobei der Halter 9 ein scheibenförmiges Gehäuse 12 aufweist, wobei das scheibenförmiges Gehäuse 12 runde Oberflächen 13 aufweist und an den Außenflächen keine Ecken aufweist, wobei das System 1 ein Befestigungssystem 14 umfasst, wobei das Befestigungssystem 14 einen zweiten Befestigungsadapter 16 umfasst, an dem der Halter 9 angeordnet ist zur Befestigung des Halters 9 an dem bewegbaren Maschinenteil 5, wobei der zweite Befestigungsadapter 16 zwei Schenkel 23, 24 aufweist, die in einem rechten Winkel zueinander angeordnet sind, wobei an dem ersten Schenkel 23 der Halter 9 befestigt ist und an dem zweiten Schenkel 24 der zweite Befestigungsadapter 16 mit dem bewegbaren Maschinenteil 5 verbunden ist.

Das Befestigungssystem 14 wird vorzugsweise an der letzten Achse eines Roboters fixiert. Damit weist das Befestigungssystem 14 eine definierte Orientierung bzw. einen definierten Winkel zur letzten Achse auf.

Eine Längsachse des Werkzeugs 7 ist vorzugsweise im Winkel von 90° zu einer letzten Achse des bewegbaren Maschinenteils 5 angeordnet.

Das scheibenförmige Gehäuse 12 weist runde Oberflächen auf und an den Außenflächen keine Ecken auf.

Durch die runde Oberfläche 13 des scheibenförmigen Gehäuses 12 ist an jeder Stelle eine mögliche Kollisionsfläche vorhanden und eben keine Kollisionskante oder Kollisionsecke, wodurch ein Verletzungsrisiko minimiert ist. Die Außenkonturen des scheibenförmigen Gehäuses sind dabei optional rundlich, auch kreisförmig oder bogenförmig ausgebildet. Das System hat keine scharfen Kanten.

Der Halter 9, der die Distanzsensoren 8 aufnimmt, kann monolithisch oder modular sein.

Der Halter 9 bzw. die Aufnahme für die Distanzsensoren 8 sind fest mit den Befestigungsadaptern 15, 16 verbunden, so dass sie sich bei einem Stoß zwischen Mensch und Halter 9 nicht von den Befestigungsadaptern 15, 16 löst.

Das Sensorsystem 2 dient zum sicheren Überwachen des Gefahrenbereichs bzw. eines Überwachungsbereichs des bewegbaren Maschinenteils 5.

Die Steuer- und Auswerteeinheit 28 erkennt Schutzfeldmantelverletzungen und kann ein sicherheitsgerichtetes Abschaltsignal ausgeben, um eine gefahrbringende Bewegung des beweglichen Maschinenteils 5 zu stoppen bzw. das Teil abzubremsen. Das kann z.B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden. Beispielsweise ist die Steuer- und Auswerteeinheit 28 zweikanalig ausgebildet.

Die mehreren Distanzsensoren 8 sind mit der Steuer- und Auswerteeinheit 28 zur Auswertung der Distanzsensoren 8 verbunden.

Die Distanzsensoren 8 sind optional entlang einem Ring beanstandet zueinander angeordnet, wobei die Distanzsensoren 8 einen flächigen Schutzfeldmantel 11 bilden, welcher sich beispielsweise zylinderförmig oder kegelstumpfförmig erstreckt.

Optional weisen die Distanzsensoren 8 gleichmäßige Abstände auf. Durch die gleichmäßigen Abstände der Distanzsensoren 8 und eine jeweils identische Winkelausrichtung der Detektionsstrahlen 10 wird eine nahezu gleichmäßige Auflösung innerhalb des Schutzfeldes erreicht.

Die Distanzsensoren 8 sind berührungslos wirkende abstandsmessende Distanzsensoren 8, wobei die Distanzsensoren 8 einen Detektionsstrahl zum Erfassen von Objekten im Überwachungsbereich aufweisen. Bevorzugt sind die Distanzsensoren 8 optoelektronische Distanzsensoren 8.

Die Distanzsensoren 8 können jeweils ein linienförmiges oder flächiges Schutzfeld aufweisen. Das flächige Schutzfeld ist fächerförmig ausgebildet mit einem bestimmten Öffnungswinkel von beispielsweise 2° bis 20°.

Die Überwachung erfolgt optional mit einer Anzahl einfacher, eindimensional tastender Distanzmesssensoren.

Beispielsweise sind die Distanzsensoren 8 Lichtlaufzeitsensoren.

Ein modularer Aufbau des Halters 9 ist ebenfalls vorgesehen. Ein Submodul des Halters 9 enthält hierbei nur eine begrenzte Anzahl von Distanzsensoren 8. Durch Kombination verschiedener Submodule können so beliebige Absicherungskonturen erzeugt werden.

Zur Erzeugung eines quasi geschlossenen Schutzfeldmantels 11 aus den Distanzsensoren 8 ist eine Anpassung der Sensoranzahl vorgesehen: Es kann beispielsweise die Sensoranzahl verändert werden. Je mehr Distanzsensoren 8 angeordnet werden, desto dichter liegen die optischen Achsen der Distanzsensoren 8 nebeneinander, wodurch der Schutzfeldmantel eine höhere Auflösung aufweist.

Optional weisen Aufnahmen des Halters 9 für die Distanzsensoren 8 mindestens eine mechanische Befestigung für die Distanzsensoren auf, an die die Distanzsensoren 8 in mindestens einer vordefinierten Lage montierbar sind.

Der Halter 9 bzw. eine Aufnahme in dem Halter 9 ist so realisiert, dass alle Distanzsensoren 8 eine feste Relativposition zueinander haben, die kompatibel mit dem Absicherungskonzept ist.

Die Aufnahme ist optional so realisiert, dass mehrere Orientierungen der einzelnen Distanzsensoren 8 möglich sind, die jeweils kompatibel mit dem Absicherungskonzept sind.

Das Befestigungssystem 14 ist so ausgebildet, dass aufgrund des Befestigungsmechanismus keine Manipulation möglich ist. D.h. der Halter 9 muss zuerst montiert werden, anschließend das Werkzeug 7. Das Befestigungssystem 14 ist so ausgelegt, dass der Halter 9 nur nach Demontage des Werkzeugs 7 entfernt werden kann

Das Befestigungssystem 14 ist so ausgebildet, dass das Werkzeug 7 relativ zum Halter 9 bzw. EOAS höhenverstellbar ist. Dadurch kann der Schutzfeldmantel 11 immer an die Applikation und der Dimension vom Werkzeug 7 angepasst werden.

Das Befestigungssystem 14 ist so ausgebildet, dass das Werkzeug 7 einfach gewechselt werden kann. Dies kann vorzugsweise auch im laufenden Betrieb geschehen.

Das Befestigungssystem 14 ist so ausgebildet, dass das Werkzeug 7 nach einer Montage nicht in seiner Position und Lage verrutscht, da die Position von Werkzeuglänge zu Schutzfeldmantel 11 gewährleistet bleiben muss.

Das Befestigungssystem 14 ist so ausgebildet, dass eine Zugentlastung von Kabeln und Leitungen an dem Befestigungssystem vorgesehen ist.

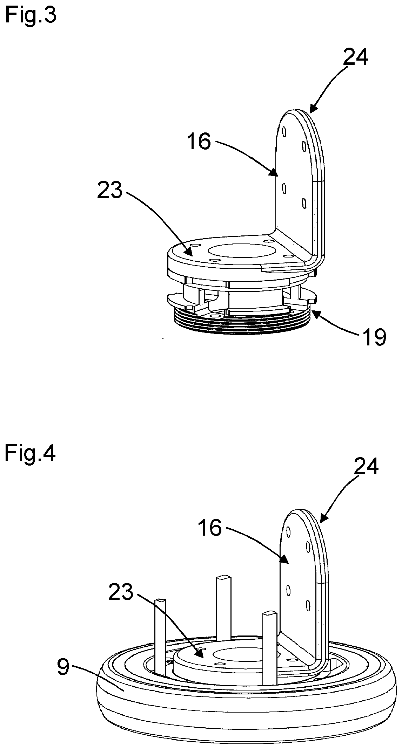

Gemäß Figur 3 und Figur 4 sind der zweite Befestigungsadapter 16 mit dem Halter 9 mittels einer einzigen Verschraubung 19 verschraubt, wobei die Verschraubung 19 einen Durchmesser aufweist, der größer als die zentrale durchgehende Öffnung 20 für das Werkzeug 7 ist.

Dadurch, dass der Durchmesser eine Größe aufweist, der größer als die zentrale durchgehende Öffnung 20 für das Werkzeug 7 ist, kann die Verschraubung 19 die zentrale Öffnung 20 umschließen und die Verschraubung 19 kann beispielsweise mit der bloßen Hand gelöst und befestigt bzw. fixiert werden.

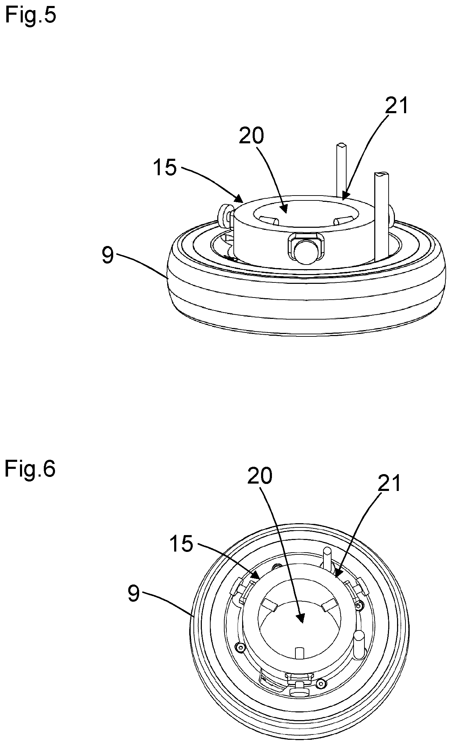

Gemäß Figur 5 und 6 weist der erste Befestigungsadapter 15 eine ringförmige Befestigungseinheit 21 auf, wobei die ringförmige Befestigungseinheit 21 die zentrale Öffnung 20 umschließt bzw. umringt und an der ringförmigen Befestigungseinheit 21 symmetrisch Befestigungsmittel angeordnet sind.

Dadurch kann eine zentrale Achse des ersten Befestigungsadapters 15 deckungsgleich mit einer zentralen Achse des Werkzeuges 7 angeordnet werden. Dabei ist das Werkzeug 7 zentrisch zu dem ersten Befestigungsadapter 15 und zentrisch zu dem Halter 9 angeordnet.

Gemäß Figur 3 und 4 weist der erste Schenkel 23 des zweiten Befestigungsadapters 16 eine Öffnung für das Werkzeug 7 auf.

Dadurch kann eine zentrale Achse der Öffnung des ersten Schenkels 23 des zweiten Befestigungsadapters 16 deckungsgleich mit einer zentralen Achse des Werkzeuges 7 angeordnet werden. Dabei ist das Werkzeug 7 zentrisch zu der Öffnung des ersten Schenkels 23 des zweiten Befestigungsadapters 16 und zentrisch zu dem Halter 9 angeordnet.

Gemäß Figur 3 und 4 weisen der erste Schenkel 23 und der zweite Schenkel 24 jeweils Befestigungslöcher auf.

Dadurch kann an dem ersten Schenkel 23 einfach, beispielsweise mittels Montageschrauben der Halter 9 befestigt werden und der zweite Schenkel 24 des zweiten Befestigungsadapters 16 beispielsweise mittels Montageschrauben mit dem bewegbaren Maschinenteil 5 verbunden werden.

Gemäß Figur 3 und 4 sind der erste Schenkel 23 und der zweite Schenkel 24 an den Enden jeweils rund ausgeführt.

Durch die runde Oberfläche der Enden sind keine scharfen Kanten oder Ecken vorhanden, wodurch ein Verletzungsrisiko minimiert ist. Die Außenkonturen der Schenkel 23, 24 sind dabei optional kreisförmig oder bogenförmig ausgebildet.

Gemäß einer nicht dargestellten Ausführungsform ist an dem Befestigungssystem 14 eine Materialzuführungsvorrichtung angeordnet und befestigt.

Das Befestigungssystem 14 ist so ausgebildet, dass Applikationen mit und ohne Zuführung von Montageteilen realisiert werden können. Bei Schraubapplikationen kann es z.B. vorkommen, dass Schrauben durch eine Zuführung entlang des Werkzeugs 7, beispielsweise eines Schraubwerkzeugs an die Montagestelle geliefert werden.

Das Befestigungssystem 14 ist so ausgebildet, dass die Zuführung den Schutzfeldmantel 11 nicht beeinträchtigt oder abschattet. Dabei wird die Materialzuführungsvorrichtung beispielsweise innerhalb des Halters 9 geführt, also nicht durch den Schutzfeldmantel 11, oder die Materialzuführungsvorrichtung wird zwischen zwei Detektionsstrahlen 10 nahe des Ursprungs der Detektionsstrahlen 10 geführt, wodurch der Schutzfeldmantel 11 ebenfalls nicht beeinträchtigt bzw. abgeschattet wird.

Gemäß Figur 2 ist das Werkzeug ein Montagewerkzeug 27, ein Schraubwerkzeug, ein Klebewerkzeug, ein Reinigungswerkzeug, ein Bohrwerkzeug, ein Fräswerkzeug ein Schleifwerkzeug oder ein Entgratwerkzeug.

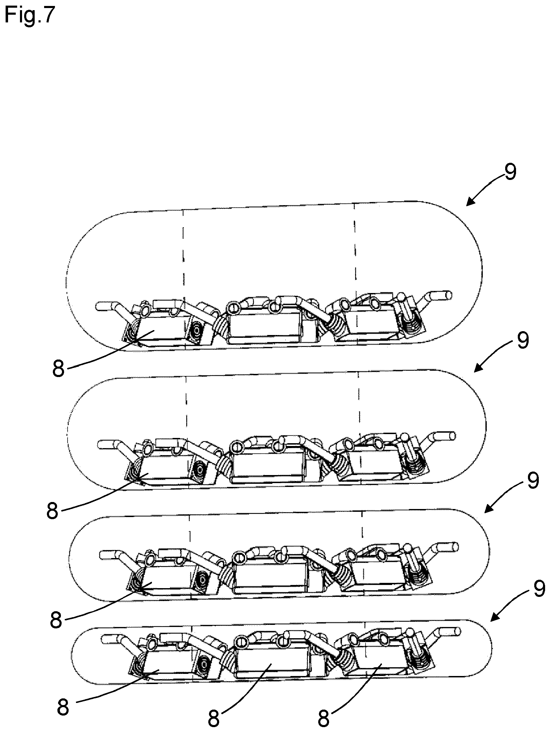

Figur 7 zeigt die Anordnung der Distanzsensoren in verschiedenen Haltern 9.

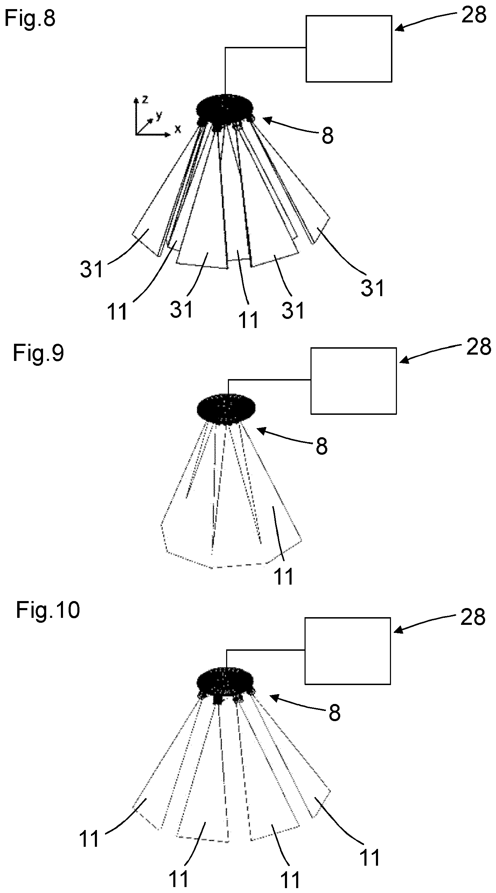

Gemäß Figur 8 umfasst das System 1 die Steuer- und Auswerteeinheit 28, wobei die Distanzsensoren 8 mit der Steuer- und Auswerteeinheit 28 verbunden sind, wobei erste Detektionsstrahlen der Distanzsensoren 8 den Schutzfeldmantel 11 bilden und zweite Detektionsstrahlen der Distanzsensoren 8 ein Warnfeldmantel 31 bilden, wobei der Warnfeldmantel 31 den Schutzfeldmantel 11 umhüllt.

Der äußere Warnfeldmantel 31 führt zu einer schwächeren Sicherheitsmaßnahme bei einem Eingriff wie beispielsweise einem Alarm oder einer gewissen Geschwindigkeitsreduktion und erst der innere Schutzfeldmantel 11 fungiert als Schutzfeld mit einer echten Absicherung durch Anhalten, Ausweichen oder starke Geschwindigkeitsreduktion des Werkzeuges 7.

Gemäß Figur 8 ist die Steuer- und Auswerteeinheit 28 ausgebildet, eine Bewegungsgeschwindigkeit des bewegbaren Maschinenteils 5 zu ändern, wobei die Bewegungsgeschwindigkeit bei einem Eingriff in den Warnfeldmantel 31 verlangsamt wird und bei einem Eingriff in den Schutzfeldmantel 11 gestoppt wird.

Gemäß Figur 9 ist die Steuer- und Auswerteeinheit 28 ausgebildet, das Werkzeug 7 erst dann zu aktivieren, wenn zwischen Werkzeug 7 und einem Werkstück ein Mindestabstand vorhanden ist, wobei der Mindestabstand 14 mm beträgt.

Das System 1 bzw. die Steuer- und Auswerteeinheit 28 ist dazu ausgebildet, dass der Schutzfeldmantel 11 so ausgebildet ist, dass bei Annährung an einen Prozesspunkt, beispielsweise der Punkt an dem die Schraube montiert wird, das bewegbare Maschinenteil 5 bzw. der Roboter bei einem Eingriff in den Warnfeldmantel 31 langsamer wird bzw. bei einem Eingriff in den Schutzfeldmantel 11 stoppt.

Das System bzw. die Steuer- und Auswerteeinheit 28 ist dazu ausgebildet, dass der Schutzfeldmantel so ausgebildet ist, dass das Werkzeug 7 und Roboter im Falle eines Eingriffs abgeschaltet bzw. gestoppt wird. Insbesondere werden die Werkzeuge 7 erst betätigt (z.B. Rotieren des Schraubkopfes/Bohrers oder des Entgraters, Betätigen der Klebedüse, usw.), wenn der Abstand zwischen Werkzeugspitze und zu bearbeitender Oberfläche kleiner als ein Mindestanstand ist.

Bezugszeichen:
1 System
2 Sensorsystem
5 bewegbares Maschinenteil
6 Schutzbereich
7 Werkzeug
8 Distanzsensoren
9 Halter
10 Detektionsstrahlen
11 Schutzfeldmantel
12 scheibenförmiges Gehäuse
13 rund Oberflächen
14 Befestigungssystem
15 erster Befestigungsadapter
16 zweiter Befestigungsadapter
19 Verschraubung
20 zentrale durchgehende Öffnung
21 ringförmige Befestigungseinheit
22 Befestigungsmittel
23 erster Schenkel
24 zweiter Schenkel
25 Befestigungslöcher
27 Montagewerkzeug
28 Steuer- und Auswerteeinheit
29 erste Detektionsstrahlen
30 zweite Detektionsstrahlen
31 Warnfeldmantel

## Patentansprüche

1. System (1) mit einem Sensorsystem (2) mit Distanzsensoren (8) und einer Steuer- und Auswerteeinheit (28) zur Überwachung eines Gefahrenbereichs an einem bewegbaren Maschinenteil (5) mit mindestens einem Schutzbereich (6), wobei an dem bewegbaren Maschinenteil (5) ein Werkzeug (7) angeordnet ist, wobei die Distanzsensoren (8) an einem Halter (9) angeordnet sind,
wobei eine Vielzahl von Distanzsensoren (8) angeordnet sind, wobei die Detektionsstrahlen (10) der Distanzsensoren (8) einen Schutzfeldmantel (11) bilden, wobei der Halter (9) die Distanzsensoren (8) aufweist, wobei der Halter (9) ein scheibenförmiges Gehäuse (12) aufweist, wobei das scheibenförmige Gehäuse (12) runde Oberflächen (13) aufweist und an den Außenflächen keine Ecken aufweist, wobei das System ein Befestigungssystem (14) umfasst,
wobei das Befestigungssystem (14) einen ersten Befestigungsadapter (15) umfasst, an dem der Halter (9) angeordnet ist zur Befestigung des Halters (9) an dem Werkzeug (7), wobei der erste Befestigungsadapter (15) eine zentrale durchgehende Öffnung (20) für das Werkzeug (7) aufweist,
oder das Befestigungssystem (14) einen zweiten Befestigungsadapter (16) umfasst, an dem der Halter (9) angeordnet ist zur Befestigung des Halters (9) an dem bewegbaren Maschinenteil (5), wobei der zweite Befestigungsadapter (16) zwei Schenkel (23, 24) aufweist, die in einem rechten Winkel zueinander angeordnet sind, wobei an dem ersten Schenkel (23) der Halter (9) befestigt ist und an dem zweiten Schenkel (24) der zweite Befestigungsadapter (16) mit dem bewegbaren Maschinenteil (5) verbunden ist, **dadurch gekennzeichnet, dass** der erste Befestigungsadapter (15) oder der zweite Befestigungsadapter (16) mit dem Halter (9) mittels einer einzigen Verschraubung (19) verschraubt sind, wobei die Verschraubung (19) einen Durchmesser aufweist, der größer als die zentrale durchgehende Öffnung (20) für das Werkzeug (7) ist.

2. System (1) nach Anspruch 1, **dadurch gekennzeichnet, dass** der erste Schenkel (23) des zweiten Befestigungsadapters (16) eine Öffnung für das Werkzeug (7) aufweist.

3. System (1) nach mindestens einem der vorhergehenden Ansprüche 1 oder 2, **dadurch gekennzeichnet, dass** der erste Schenkel (23) und der zweite Schenkel (24) jeweils Befestigungslöcher aufweisen.

4. System (1) nach mindestens einem der vorhergehenden Ansprüche 1 oder 2, **dadurch gekennzeichnet, dass** der erste Schenkel (23) und der zweite Schenkel (24) an den Enden jeweils rund ausgeführt sind.

5. System (1) nach mindestens einem der vorhergehenden Ansprüche, **dadurch gekennzeichnet, dass** an dem Befestigungssystem (14) eine Materialzuführungsvorrichtung angeordnet und befestigt ist.

6. System (1) nach mindestens einem der vorhergehenden Ansprüche, **dadurch gekennzeichnet, dass** das Werkzeug (7) ein Montagewerkzeug (27), ein Schraubwerkzeug, ein Klebewerkzeug, ein Reinigungswerkzeug, ein Bohrwerkzeug, ein Fräswerkzeug, ein Schleifwerkzeug oder ein Entgratwerkzeug ist.

7. System (1) nach mindestens einem der vorhergehenden Ansprüche, **dadurch gekennzeichnet, dass** das System die Steuer- und Auswerteeinheit (28) umfasst, wobei die Distanzsensoren (8) mit der Steuer- und Auswerteeinheit (28) verbunden sind, wobei erste Detektionsstrahlen (29) der Distanzsensoren (8) den Schutzfeldmantel (11) bilden und zweite Detektionsstrahlen (30) der Distanzsensoren (8) ein Warnfeldmantel (31) bilden, wobei der Warnfeldmantel (31) den Schutzfeldmantel (11) umhüllt.

8. System (1) nach mindestens einem der vorhergehenden Ansprüche, **dadurch gekennzeichnet, dass** die Steuer- und Auswerteeinheit (28) ausgebildet ist, die Bewegungsgeschwindigkeit des bewegbaren Maschinenteils (5) zu ändern, wobei die Bewegungsgeschwindigkeit bei einem Eingriff in den Warnfeldmantel (31) verlangsamt wird und bei einem Eingriff in den Schutzfeldmantel (11) gestoppt wird.

9. System (1) nach mindestens einem der vorhergehenden Ansprüche, **dadurch gekennzeichnet, dass** die Steuer- und Auswerteeinheit (28) ausgebildet ist, das Werkzeug (7) erst dann zu aktivieren, wenn zwischen Werkzeug (7) und einem Werkstück ein Mindestabstand vorhanden ist, wobei der Mindestabstand auf anthropometrischen Daten basiert.

10. System (1) nach mindestens einem der vorhergehenden Ansprüche, **dadurch gekennzeichnet, dass** die Steuer- und Auswerteeinheit (28) ausgebildet ist, das Werkzeug (7) erst dann zu aktivieren, wenn zwischen Werkzeug (7) und einem Werkstück ein Mindestabstand vorhanden ist, wobei der Mindestabstand 10 mm bis 20 mm beträgt.

11. System (1) nach mindestens einem der vorhergehenden Ansprüche, **dadurch gekennzeichnet, dass** die Steuer- und Auswerteeinheit (28) ausgebildet ist, das Werkzeug (7) erst dann zu aktivieren, wenn zwischen Werkzeug (7) und einem Werkstück ein Mindestabstand vorhanden ist, wobei der Mindestabstand 14 mm beträgt.

## Claims

1. A system (1) with a sensor system (2) comprising distance sensors (8) and a control and evaluation unit (28) for monitoring a hazardous zone at a movable machine part (5) having at least one protected zone (6), wherein a tool (7) is arranged at the movable machine part (5),
wherein the distance sensors (8) are arranged at a holder (9);
wherein a plurality of distance sensors (8) are arranged, with the detection beams (10) of the distance sensors (8) forming a protected field jacket (11),
wherein the holder (9) has the distance sensors (8), with the holder (9) having a disk-shaped housing (12), with the disk-shaped housing (12) having round surfaces (14) and not having any corners at the outer surfaces, with the system comprising a fastening system (14),
wherein the fastening system (14) comprises a first fastening adapter (15) at which the holder (9) is arranged for fastening the holder (9) to the tool (7), with the first fastening adapter (15) having a central continuous opening (20) for the tool (7);
or the fastening system (14) comprises a second fastening adapter (16) at which the holder (9) is arranged for fastening the holder (9) to the movable machine part (5), with the second fastening adapter (16) having two limbs (23, 24) that are arranged at a right angle to one another, with the holder (9) being fastened to the first limb (23) and with the second fastening adapter (16) being connected to the movable machine part (5) at the second limb (24), **characterized in that** the first fastening adapter (15) or the second fastening adapter (16) is screwed to the holder (9) by means of a single screw connection (19), with the screw connection (19) having a diameter that is greater than the central continuous opening (20) for the tool (7).

2. A system (1) in accordance with claim 1, **characterized in that** the first limb (23) of the second fastening adapter (16) has an opening for the tool (7).

3. A system (1) in accordance with at least one of the preceding claims 1 or 2, **characterized in that** the first limb (23) and the second limb (24) each have fastening holes.

4. A system (1) in accordance with at least one of the preceding claims 1 or 2, **characterized in that** the first limb (23) and the second limb (34) are each formed as round at the ends.

5. A system (1) in accordance with at least one of the preceding claims, **characterized in that** a material supply device is arranged at and fastened to the fastening system (14).

6. A system (1) in accordance with at least one of the preceding claims, **characterized in that** the tool (7) is an installation tool (27), a screw tool, a bonding tool, a cleaning tool, a drilling tool, a milling tool, a grinding tool, or a deburring tool.

7. A system (1) in accordance with at least one of the preceding claims, **characterized in that** the system comprises the control and evaluation unit (28). with the distance sensors (8) being connected to the control and evaluation unit (28), with first detection beams (29) of the distance sensors (8) forming the protected field jacket (11) and second detection beams (30) of the distance sensors (8) forming a warning field jacket (31), with the warning field jacket (31) sheathing the protected field jacket (11).

8. A system (1) in accordance with at least one of the preceding claims, **characterized in that** the control and evaluation unit (28) is configured to vary a movement speed of the movable machine part (5). with the movement speed being slowed on an intervention in the warning field jacket (31) and being stopped on an intervention in the protected field jacket (11).

9. A system (1) in accordance with at least one of the preceding claims, **characterized in that** the control and evaluation unit (28) is configured to only activate the tool (7) when a minimum distance is present between the tool (7) and a workpiece, with the minimum distance being based on anthropometrical data.

10. A system (1) in accordance with at least one of the preceding claims, **characterized in that** the control and evaluation unit (28) is configured to only activate the tool (7) when a minimum distance is present between the tool (7) and a workpiece, with the minimum distance amounting to 10 mm to 20 mm.

11. A system (1) in accordance with at least one of the preceding claims, **characterized in that** the control and evaluation unit (28) is configured to only activate the tool (7) when a minimum distance is present between the tool (7 ) and a workpiece, with the minimum distance amounting to 14 mm.

## Revendications

1. Système (1) comportant un système de capteurs (2) ayant des capteurs de distance (8) et une unité de commande et d'évaluation (28) pour la surveillance d'une zone de danger sur une partie de machine mobile (5) ayant au moins une zone de protection (6),
dans lequel un outil (7) est disposé sur la partie de machine mobile (5),
les capteurs de distance (8) sont disposés sur un support (9),
il est prévu une pluralité de capteurs de distance (8), les faisceaux de détection (10) des capteurs de distance (8) formant une enveloppe de champ de protection (11),
c'est le support (9) qui comprend les capteurs de distance (8), le support (9) comprend un boîtier en forme de disque (12), le boîtier en forme de disque (12) présentant des surfaces rondes (13) et ne présentant pas de coins sur les surfaces extérieures, le système comprenant un système de fixation (14),
le système de fixation (14) comprend un premier adaptateur de fixation (15) sur lequel le support (9) est disposé pour fixer le support (9) à l'outil (7), le premier adaptateur de fixation (15) ayant une ouverture centrale traversante (20) pour l'outil (7),
ou le système de fixation (14) comprend un deuxième adaptateur de fixation (16) sur lequel le support (9) est disposé pour fixer le support (9) à la partie de machine mobile (5), le deuxième adaptateur de fixation (16) présentant deux branches (23, 24) qui sont disposées à angle droit l'une par rapport à l'autre, le support (9) étant fixé à la première branche (23), et le deuxième adaptateur de fixation (16) étant relié à la partie de machine mobile (5) sur la deuxième branche (24),
**caractérisé en ce que** le premier adaptateur de fixation (15) ou le deuxième adaptateur de fixation (16) sont vissés au support (9) au moyen d'un seul vissage (19), le vissage (19) présentant un diamètre plus grand que l'ouverture centrale traversante (20) pour l'outil (7).

2. Système (1) selon la revendication 1,
**caractérisé en ce que** la première branche (23) du deuxième adaptateur de fixation (16) présente une ouverture pour l'outil (7).

3. Système (1) selon l'une au moins des revendications précédentes 1 ou 2, **caractérisé en ce que** la première branche (23) et la deuxième branche (24) présentent chacune des trous de fixation.

4. Système (1) selon l'une au moins des revendications précédentes 1 ou 2, **caractérisé en ce que** la première branche (23) et la deuxième branche (24) sont chacune réalisées rondes à leurs extrémités.

5. Système (1) selon l'une au moins des revendications précédentes, **caractérisé en ce qu'**un dispositif d'alimentation en matière est disposé et fixé sur le système de fixation (14).

6. Système (1) selon l'une au moins des revendications précédentes, **caractérisé en ce que** l'outil (7) est un outil de montage (27), un outil de vissage, un outil de collage, un outil de nettoyage, un outil de perçage, un outil de fraisage, un outil de meulage ou un outil d'ébavurage.

7. Système (1) selon l'une au moins des revendications précédentes, **caractérisé en ce que** le système comprend l'unité de commande et d'évaluation (28), les capteurs de distance (8) étant reliés à l'unité de commande et d'évaluation (28), des premiers faisceaux de détection (29) des capteurs de distance (8) formant l'enveloppe de champ de protection (11), et des deuxièmes faisceaux de détection (30) des capteurs de distance (8) formant une enveloppe de champ d'alerte (31), l'enveloppe de champ d'alerte (31) entourant l'enveloppe de champ de protection (11).

8. Système (1) selon l'une au moins des revendications précédentes, **caractérisé en ce que** l'unité de commande et d'évaluation (28) est réalisée pour modifier la vitesse de mouvement de la partie de machine mobile (5), la vitesse de mouvement étant ralentie lors d'une intervention dans l'enveloppe de champ d'alerte (31) et étant arrêtée lors d'une intervention dans l'enveloppe de champ de protection (11).

9. Système (1) selon l'une au moins des revendications précédentes, **caractérisé en ce que** l'unité de commande et d'évaluation (28) est réalisée pour n'activer l'outil (7) que lorsqu'il existe une distance minimale entre l'outil (7) et une pièce à usiner, la distance minimale étant basée sur des données anthropométriques.

10. Système (1) selon l'une au moins des revendications précédentes, **caractérisé en ce que** l'unité de commande et d'évaluation (28) est réalisée pour n'activer l'outil (7) que lorsqu'il existe une distance minimale entre l'outil (7) et une pièce à usiner, la distance minimale étant de 10 mm à 20 mm.

11. Système (1) selon l'une au moins des revendications précédentes, **caractérisé en ce que** l'unité de commande et d'évaluation (28) est réalisée pour n'activer l'outil (7) que lorsqu'il existe une distance minimale entre l'outil (7) et une pièce à usiner, la distance minimale étant de 14 mm.
